# EUROPÄISCHE PATENTSCHRIFT

(11) **EP 2 449 275 B1**
(45) Veröffentlichungstag und Bekanntmachung des Hinweises auf die Patenterteilung: **27.08.2014**
(21) Anmeldenummer: 10725473.2
(22) Anmeldetag: 21.06.2010
(51) Int. Cl.: F16C 19/50

(54) **LAGERANORDNUNG**
BEARING ARRENGEMENT
AGENCEMENT DE PALIER

(30) Priorität: 03.07.2009 DE 102009031624
(43) Veröffentlichungstag der Anmeldung: 09.05.2012
(73) Patentinhaber: Aktiebolaget SKF, 41 550 Göteborg (SE)
(72) Erfinder: EDELMANN, Ludwig, 97717 Sulzthal (DE); GRIMM, Thomas, 69257 Wiesenbach (DE); VELDE, Henryk, 97440 Werneck (DE); WITTMANN, Michael, 74937 Spechbach (DE)
(74) Vertreter: Schonecke, Mitja
(86) Internationale Anmeldenummer: PCT/EP2010/058698
(87) Internationale Veröffentlichungsnummer: WO 2011/000727

(56) Entgegenhaltungen:
- EP-A1- 1 708 206
- DE-U- 7 228 159
- US-A- 5 607 238

## Beschreibung

Die Erfindung betrifft eine Lageranordnung zur Lagerung eines dreh- oder schwenkbaren ersten Maschinenteils relativ zu einem zweiten Maschinenteil.

Eine Lageranordnung dieser Art ist beispielsweise aus der DE 38 35 315 A1 bekannt. Hier wird ein Segmentlager für Schwenkbewegungen beschrieben, das ein äußeres und ein inneres Laufringsegment aufweist. Zwischen den Segmenten sind Wälzkörper angeordnet, die von einem Käfig auf Abstand gehalten werden. Ähnliche Lösungen werden in der DE 103 27 641 A1, in der US 2008/0240640 A1 und in der EP 0 540 848 B1 beschrieben.

Allen vorbekannten Lösungen ist es gemein, dass es relativ kostspielig ist, sehr große Lagerungen zu realisieren, wenn gefordert wird, dass eine präzise Lagerung um einen Schwenk-Mittelpunkt herum bewerkstelligt wird.

Eine Lageranordnung mit den Merkmalen des Oberbegriffs des Anspruchs 1 ist in EP 1 708 206 A1 offenbart.

Der Erfindung liegt die Aufgabe zu Grunde, eine Lageranordnung der eingangs genannten Art so fortzubilden, dass es möglich ist, sehr große Lagerdurchmesser zu realisieren, wobei es in einfacher Weise möglich sein soll, die Lageranordnung exakt so einzustellen, dass die beiden relativ zueinander zu lagernden Maschinenteile optimal zueinander verlaufen; es soll also eine einfache Mittelpunktjustage möglich sein. Des Weiteren soll die Lageranordnung möglichst platzsparend aufgebaut sein.

Die Lösung dieser Aufgabe durch die Erfindung ist dadurch gekennzeichnet, dass Mittel vorhanden sind, mit denen die Führungsschienen relativ zum Trägerelement vorzugsweise in Richtung zum Mittelpunkt der Lagerschienen oder vom Mittelpunkt weg verschoben verden können. Dabei kann eine einzige Lagerschiene mit dem ersten Maschinenteil verbunden sein. Bevorzugt ist indes, dass mehrere segmentartige Lagerschienen mit dem ersten Maschinenteil verbunden sind.

Die mindestens eine gekrümmt ausgebildete Lagerschiene ist dabei vorzugsweise kreisförmig oder kreisbogenförmig ausgebildet.

Bevorzugt erstreckt sich dabei jede Lagerschiene um einen Umfangswinkel zwischen 5° und 50°, vorzugsweise zwischen 10° und 40°, um den Mittelpunkt der Lagerschienen herum. Unter Mittelpunkt ist hier der Punkt zu verstehen, um den bei kreisförmiger Ausführung der Lagerschienen das erste Maschinenteil verschwenkt wird.

Jedes Lagerelement weist eine erste Führungsschiene mit einer konvex ausgebildeten Führung für die Lagerschiene und eine zweite Führungsschiene mit einer konkav ausgebildeten Führung für die Lagerschiene auf.

Die Lagerschiene und die erste und zweite Führungsschiene haben dabei bevorzugt korrespondierende Laufbahnen. Zwischen den Laufbahnen können Wälzkörper, beispielsweise in Form von Kugeln oder Zylinderrollen, angeordnet sein.

Weiterhin sind die Wälzkörper bevorzugt in einem Käfig geführt. Der Käfig kann dabei mit einer Anti-Schlupf-Einrichtung ausgestattet sein, die als solche bekannt ist und beispielsweise Zahnräder bzw. Zahnstangen einsetzt, um eine ungewünschte Relativbewegung des Käfigs zu den Lagerschienen zu verhindern.

Die erste Führungsschiene und die zweite Führungsschiene sind an oder in einem Trägerelement befestigt. Die Festlegung der Führungsschienen am oder im Trägerelement kann mittels Schrauben erfolgen.

Erfindungsgemäß sind ferner Mittel vorhanden, mit denen die Führungsschienen relativ zum Trägerelement vorzugsweise etwa in Richtung zum Mittelpunkt der Lagerschienen oder vom Mittelpunkt weg verschoben werden können. Diese Mittel können mindestens ein Schraubenelement umfassen, das in mindestens eine Gewindebohrung im Trägerelement einschraubbar ist. Das Trägerelement kann hierzu seitlich auskragende Abschnitte aufweisen, in denen die Gewindebohrungen angeordnet sind.

Die Erfindung sieht also eine Lageranordnung vor, die insbesondere Schwenkbewegungen des einen Maschineteils relativ zu dem anderen ermöglicht. Anstelle kompletter Lagerringe werden mindestens zwei Lineartische eingesetzt, die jeweils (kreis)bogenförmige Lagerschiene (Innenschienen) einsetzen. Diese können mit dem zu verschwenkenden (ersten) Bauteil in einfacher Weise verbunden, z. B. verschraubt, sein.

Die Lagerelemente, mit denen die Lagerschienen gelagert werden, bestehen aus einem Außenteil, das die Lagerschienen samt bogenförmigem Käfig mit einem Anti-Schlupf-System (sog. Anti-Creep-System - ACS) auf einem entsprechend gelformten konkaven Führungsteil führt. Des Weiteren ist ein Innenteil vorhanden, das mit einem entsprechend geformten konvexen Führungsteil die Lagerschiene führt. Die konkav bzw. konvex geformten Führungsschienen können mittels Vorspannelementen (z. B. mittels Gewindestiften) in ihrer Lage eingestellt werden, wobei eine Verschiebung möglich bzw. einstellbar ist, die im Wesentlichen auf den Mittelpunkt der Lageranordnung zu gerichtet ist. Zwar sind hierbei nur geringe Verstellwege möglich, diese reichen aber aus, um auch bei großen Anlagen, wie z. B. bei Satellitenschirmen, bei Sonnenkollektoren oder bei Windrädern, die theoretischen Mittelpunkte einfach und exakt zu justieren.

Die vorgeschlagene Lösung ist kostengünstig umsetzbar, wobei insbesondere sehr große Lagerdurchmesser günstig realisierbar sind. Die Mittelpunktjustage ist in einfacher Weise präzise möglich. Die Anordnung von Einzeltischen (Lagerelementen) ermöglicht ein platzsparendes Konzept.

Die vorgeschlagene Lageranordnung kann als Segment-Schwenklager unter Einsatz von Linearschlitten angesprochen werden.

Die vorgeschlagene Lösung eignet sich insbesondere für große Schwenklager, wie sie beispielsweise in Sattelitenschirmen, Schleusen, Windrädern und Sonnenkollektoren benötigt werden, wobei nur geringe Schwenkwinkel erforderlich sind.

In der Zeichnung ist ein Ausführungsbeispiel der Erfindung dargestellt. Es zeigen:
- Fig. 1: schematisch die Draufsicht auf eine Lageranordnung, mit der ein erstes Maschinenteils relativ zu einem zweiten Maschinenteil gelagert wird,
- Fig. 2: die Draufsicht auf eines der drei Lagerelemente gemäß Fig. 1 und
- Fig. 3: den Schnitt A-B gemäß Fig. 2.

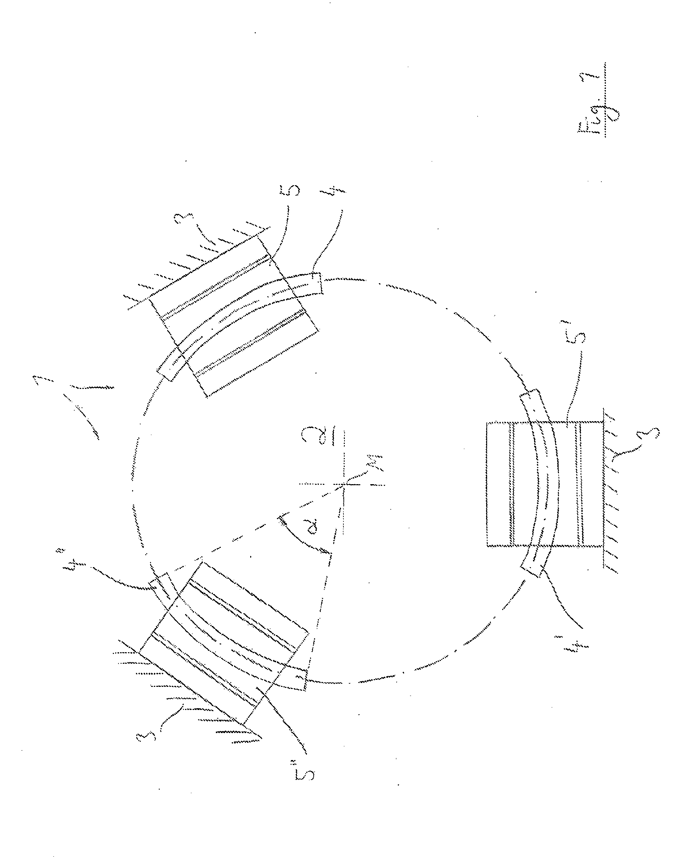

In Fig. 1 ist eine Lageranordnung 1 skizziert, die ein erstes Maschinenteil 2 relativ zu einem zweiten Maschinenteil 3 lagert. Das erste Maschinenteil 2 ist nur angedeutet dargestellt und soll um einen gewissen Schwenkwinkel um den Mittelpunkt M eines gedachten Kreises schwenken. Das zweite Maschinenteil 3 ist ebenfalls nur angedeutet; es handelt sich hier um ein ortsfestes Bauteil.

Vorliegend weist die Lageranordnung drei Lagerschienen 4, 4' und 4" auf, die jeweils mit dem ersten Maschinenteil 2 fest verbunden sind. Die drei Lagerschienen 4, 4', 4" werden von zugeordneten drei Lagerelementen 5, 5' und 5" gelagert. Die drei Lagerschienen 4, 4', 4" erstrecken sich dabei jeweils um einen Umfangswinkel α, der vorliegend ca. 50° beträgt. Dabei sind der Winkel α sowie die Abmessungen der Lagerelemente 5, 5', 5" in Umfangsrichtung so gewählt, dass die Lagerschiene 4, 4', 4" stets, d. h. in jeder Schwenklage, von dem Lagerelement 5, 5', 5" unterstützt, d. h. gelagert wird.

Wie anhand Fig. 1 gesehen werden kann, wird das erste Maschinenteil 2 also mittels dreier Lagerelemente 5, 5', 5" gelagert, die jeweils um 120° versetzt über dem Umfang des ersten Maschinenteils 2 angeordnet sind.

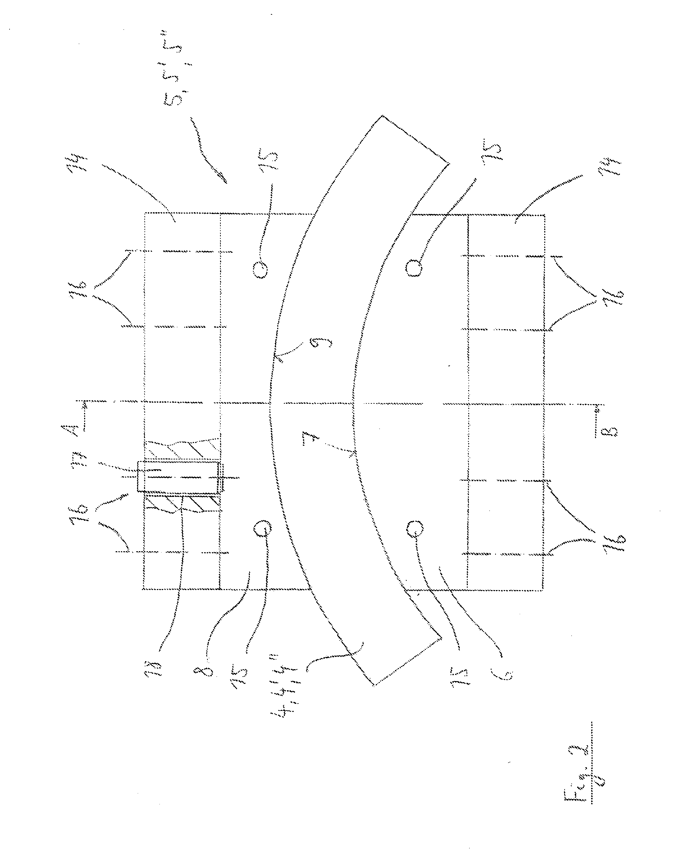

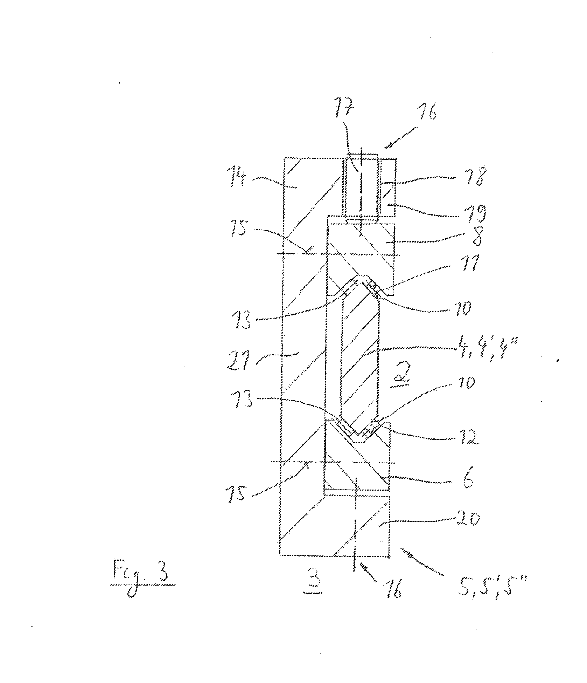

Details der Lagerelemente 5, 5', 5" und der Lagerung der Lagerschienen 4, 4', 4" gehen aus den Figuren 2 und 3 hervor.

Die Lagerelemente 5, 5', 5" weisen je ein Trägerelement 14 auf, das einen U-förmigen Querschnitt aufweist (s. Fig. 3), d. h. es sind zwei auskragende Abschnitte 19 und 20 an einer Platte 21 vorgesehen, die als Einfassung einer ersten Führungsschiene 6 und einer zweiten Führungsschiene 8 dienen.

Die erste Führungsschiene 6 weist eine konvex ausgebildete Führung 7 für die Lagerschiene 4, 4', 4" auf und ist mit Schrauben 15 an der Platte 21 festgeschraubt. Die zweite Führungsschiene 8 weist eine konkav ausgebildete Führung 9 für die Lagerschiene 4, 4', 4" auf und ist gleichermaßen mit Schrauben 15 an der Platte 21 befestigt.

Wie in Fig. 3 gesehen werden kann, haben sowohl die Lagerschienen 4, 4', 4" als auch die Führungsschienen 6, 8 jeweilige Laufbahnen 10, 11 und 12 für Wälzkörper 13, die im Ausführungsbeispiel als Zylinderrollen skizziert sind; genauso können natürlich auch andere Wälzkörper wie Kugeln zum Einsatz kommen.

In den auskragenden Abschnitten 19 und 20 sind Mittel 16 zum Einstellen der Führungsschienen 6, 8 vorgesehen. Diese Mittel bestehen im Ausführungsbeispiel aus einer Anzahl Schraubenelementen 17, die in Gewindebohrungen 18 eingeschraubt sind, die in den auskragenden Abschnitten 19, 20 eingearbeitet sind. Dabei können eine Anzahl derartiger Gewindebohrungen 18 mit Schraubenelementen 17 nebeneinander vorgesehen sein. Im Ausführungsbeispiel sind es im auskragenden Abschnitt 19 genauso wie im auskragenden Abschnitt 20 jeweils 5 parallel nebeneinander angeordnete Gewindebohrungen 18 samt Schraubenelementen 17. Es sind auch mehrere Gewindebohrungen - z. B. acht bis zehn - möglich.

Durch mehr oder weniger festes Anziehen bzw. Einschrauben der Schraubenelemente 17 kann die Führungsschiene 6 bzw. 8 - grob betrachtet - lokal in Richtung zum Mittelpunkt M hin verschoben oder von ihm weg geschoben werden. Damit ist es möglich, die Führungsschiene 6, 8 im Trägerelement 14 so zu bewegen, dass sich nicht nur eine gewünschte Vorspannung der Lagerschiene 4, 4', 4' zwischen den Führungsschienen 6, 8 ergibt, sondern dass die Führungsschienen 4, 4', 4" und damit das erste Maschinenteil 2 exakt um den Mittelpunkt M herum geschwenkt werden kann.

### Bezugszeichenliste

- 1: Lageranordnung
- 2: erstes Maschinenteil
- 3: zweites Maschinenteil
- 4: Lagerschiene
- 4': Lagerschiene
- 4": Lagerschiene
- 5: Lagerelement
- 5': Lagerelement
- 5": Lagerelement
- 6: erste Führungsschiene
- 7: konvex ausgebildete Führung
- 8: zweite Führungsschiene
- 9: konkav ausgebildete Führung
- 10: Laufbahn
- 11: Laufbahn
- 12: Laufbahn
- 13: Wälzkörper (Kugel, Zylinderrolle)
- 14: Trägerelement
- 15: Schraube
- 16: Mittel zum Einstellen der Führungsschiene
- 17: Schraubenelement
- 18: Gewindebohrung
- 19: auskragender Abschnitt
- 20: auskragender Abschnitt
- 21: Platte

- α: Umfangswinkel
- M: Mittelpunkt

## Patentansprüche

1. Lageranordnung (1) umfassend ein erstes (2) und ein zweites (3) Maschinenteil, wobei die Lageranordnung (1) das erste Maschinenteil um einen Mittelpunkt (M) dreh- oder schwenkbar relativ zum zweiten Maschinenteil (3) lagert, wobei das erste Maschinenteil (2) mit mindestens einer gekrümmt ausgebildeten Lagerschiene (4, 4', 4") verbunden ist und wobei mindestens zwei im Abstand zueinander angeordnete Lagerelemente (5, 5', 5") angeordnet sind, die jeweils einen Abschnitt der mindestens einen gekrümmt ausgebildeten Lagerschiene (4, 4', 4") lagern,
wobei jedes Lagerelement (5, 5', 5") eine erste Führungsschiene (6) mit einer konvex entsprechend der Krümmung der Lagerschiene (4, 4', 4") ausgebildeten Führung (7) für die Lagerschiene (4, 4', 4") und eine zweite Führungsschiene (8) mit einer konkav entsprechend der Krümmung der Lagerschiene (4, 4', 4") ausgebildeten Führung (9) für die Lagerschiene (4, 4', 4") aufweist und
wobei die erste Führungsschiene (6) und die zweite Führungsschiene (8) an oder in einem Trägerelement (14) befestigt sind,
dass **dadurch gekennzeichnet,** Mittel (16) vorhanden sind, mit denen die Führungsschienen (6, 8) relativ zum Trägerelement (14) vorzugsweise in Richtung zum Mittelpunkt (M) der Lagerschienen (4, 4', 4") oder vom Mittelpunkt (M) weg verschoben werden können.

2. Lageranordnung nach Anspruch 1, **dadurch gekennzeichnet, dass** eine einzige Lagerschiene (4) mit dem ersten Maschinenteil (3) verbunden ist.

3. Lageranordnung nach Anspruch 1, **dadurch gekennzeichnet, dass** mehrere Lagerschienen (4, 4', 4") mit dem ersten Maschinenteil (3) verbunden sind.

4. Lageranordnung nach einem der Ansprüche 1 bis 3, **dadurch gekennzeichnet, dass** die mindestens eine gekrümmt ausgebildete Lagerschiene (4, 4', 4") kreisförmig oder kreisbogenförmig ausgebildet ist.

5. Lageranordnung nach Anspruch 3 und Anspruch 4, **dadurch gekennzeichnet, dass** sich jede Lagerschiene (4, 4', 4") um einen Umfangswinkel (α) zwischen 5° und 50°, vorzugsweise zwischen 10° und 40°, um den Mittelpunkt (M) der Lagerschienen (4, 4', 4") herum erstreckt.

6. Lageranordnung nach einem der Ansprüche 1 bis 5, **dadurch gekennzeichnet, dass** die Lagerschiene (4, 4', 4") und die erste und zweite Führungsschiene (6, 8) korrespondierende Laufbahnen (10, 11, 12) aufweisen.

7. Lageranordnung nach Anspruch 6, **dadurch gekennzeichnet, dass** zwischen den Laufbahnen (10, 11, 12) Wälzkörper (13), insbesondere Kugeln oder Zylinderrollen, angeordnet sind.

8. Lageranordnung nach Anspruch 7, **dadurch gekennzeichnet, dass** die Wälzkörper (13) in einem Käfig geführt sind.

9. Lageranordnung nach Anspruch 8, **dadurch gekennzeichnet, dass** der Käfig mit einer Anti-Schlupf-Einrichtung versehen ist.

10. Lageranordnung nach einem der Ansprüche 1 bis 9, **dadurch gekennzeichnet, dass** die Festlegung der Führungsschienen (6, 8) am oder im Trägerelement (14) mittels Schrauben (15) erfolgt.

11. Lageranordnung nach einem der Ansprüche 1 bis 10, **dadurch gekennzeichnet, dass** die Mittel (16) mindestens ein Schraubenelement (17) umfassen, das in mindestens eine Gewindebohrung (18) im Trägerelement (14) einschraubbar ist.

12. Lageranordnung nach Anspruch 11, **dadurch gekennzeichnet, dass** das Trägerelement (14) seitlich auskragende Abschnitte (19, 20) aufweist, in denen die Gewindebohrungen (18) angeordnet sind.

## Claims

1. Bearing arrangement (1) comprising a first (2) and a second (3) machine part, the bearing arrangement (1) mounting the first machine part (2) such that it can be rotated or pivoted about a centre point (M) relative to the second machine part (3), the first machine part (2) being connected to at least one bearing rail (4, 4', 4") of curved configuration, and at least two bearing elements (5, 5', 5") being arranged which are arranged at a spacing from one another and in each case mount a section of the at least one bearing rail (4, 4', 4") of curved configuration, each bearing element (5, 5', 5") having a first guide rail (6) with a guide (7) for the bearing rail (4, 4', 4"), which guide (7) is of convex configuration in a manner which corresponds to the curvature of the bearing rail (4, 4', 4"), and a second guide rail (8) with a guide (9) for the bearing rail (4, 4', 4"), which guide (9) is of concave configuration in a manner which corresponds to the curvature of the bearing rail (4, 4', 4"), the first guide rail (6) and the second guide rail (8) being fastened to or in a carrier element (14), **characterized in that** there are means (16), by way of which the guide rails (6, 8) can be displaced preferably in the direction towards the centre point (M) of the bearing rails (4, 4', 4") or away from the centre point (M) relative to the carrier element (14).

2. Bearing arrangement according to Claim 1, **characterized in that** a single bearing rail (4) is connected to the first machine part (3).

3. Bearing arrangement according to Claim 1, **characterized in that** a plurality of bearing rails (4, 4', 4") are connected to the first machine part (3).

4. Bearing arrangement according to one of Claims 1 to 3, **characterized in that** the at least one bearing rail (4, 4', 4") of curved configuration is of circular or circularly arcuate configuration.

5. Bearing arrangement according to Claim 3 and Claim 4, **characterized in that** each bearing rail (4, 4', 4") extends around the centre point (M) of the bearing rails (4, 4', 4") by a circumferential angle (α) between 5° and 50°, preferably between 10° and 40°.

6. Bearing arrangement according to one of Claims 1 to 5, **characterized in that** the bearing rail (4, 4', 4") and the first and second guide rail (6, 8) have corresponding raceways (10, 11, 12).

7. Bearing arrangement according to Claim 6, **characterized in that** rolling bodies (13), in particular balls or cylindrical rollers, are arranged between the raceways (10, 11, 12).

8. Bearing arrangement according to Claim 7, **characterized in that** the rolling bodies (13) are guided in a cage.

9. Bearing arrangement according to Claim 8, **characterized in that** the cage is provided with an anti-slip device.

10. Bearing arrangement according to one of Claims 1 to 9, **characterized in that** the fixing of the guide rails (6, 8) on or in the carrier element (14) takes place by means of screws (15).

11. Bearing arrangement according to one of Claims 1 to 10, **characterized in that** the means (16) comprise at least one screw element (17) which can be screwed into at least one threaded hole (18) in the carrier element (14).

12. Bearing arrangement according to Claim 11, **characterized in that** the carrier element (14) has laterally projecting sections (19, 20), in which the threaded holes (18) are arranged.

## Revendications

1. Agencement de palier (1) comprenant une première (2) et une deuxième (3) partie de machine, l'agencement de palier (1) supportant la première partie de machine (2) de manière à pouvoir tourner ou pivoter autour d'un centre (M) par rapport à la deuxième partie de machine (3), la première partie de machine (2) étant connectée à au moins un rail de palier (4, 4', 4") réalisé sous forme courbe et au moins deux éléments de palier (5, 5', 5") disposés à distance l'un de l'autre étant prévus, lesquels supportent respectivement une portion de l'au moins un rail de palier (4, 4', 4'') réalisé sous forme courbe,
chaque élément de palier (5, 5', 5'') présentant un premier rail de guidage (6) avec un guide (7) réalisé sous forme convexe de manière à correspondre à la courbure du rail de palier (4, 4', 4'') pour le rail de palier (4, 4', 4'') et un deuxième rail de guidage (8) avec un guide (9) réalisé sous forme concave de manière à correspondre à la courbure du rail de palier (4, 4', 4'') pour le rail de palier (4, 4', 4'') et
le premier rail de guidage (6) et le deuxième rail de guidage (8) étant fixés sur ou dans un élément de support (14),
**caractérisé en ce que**
des moyens (16) sont prévus, avec lesquels les rails de guidage (6, 8) peuvent être déplacés par rapport à l'élément de support (14) de préférence dans la direction vers le centre (M) des rails de palier (4, 4', 4'') ou à l'écart du centre (M).

2. Agencement de palier selon la revendication 1, **caractérisé en ce qu'**un rail de palier unique (4) est connecté à la première partie de machine (3).

3. Agencement de palier selon la revendication 1, **caractérisé en ce que** plusieurs rails de palier (4, 4', 4'') sont connectés à la première partie de machine (3).

4. Agencement de palier selon l'une quelconque des revendications 1 à 3, **caractérisé en ce que** l'au moins un rail de palier (4, 4', 4'') réalisé sous forme courbe est réalisé sous forme circulaire ou sous forme d'arc de cercle.

5. Agencement de palier selon la revendication 3 et la revendication 4, **caractérisé en ce que** chaque rail de palier (4, 4', 4") s'étend autour du centre (M) des rails de palier (4, 4', 4") suivant un angle périphérique (α) compris entre 5° et 50°, de préférence entre 10° et 40°.

6. Agencement de palier selon l'une quelconque des revendications 1 à 5, **caractérisé en ce que** les rails de palier (4, 4', 4") et le premier et le deuxième rail de guidage (6, 8) présentent des pistes de roulement correspondantes (10, 11, 12).

7. Agencement de palier selon la revendication 6, **caractérisé en ce qu'**entre les pistes de roulement (10, 11, 12) sont disposés des corps de roulement (13), en particulier des billes ou des rouleaux cylindriques.

8. Agencement de palier selon la revendication 7, **caractérisé en ce que** les corps de roulement (13) sont guidés dans une cage.

9. Agencement de palier selon la revendication 8, **caractérisé en ce que** la cage est munie d'un dispositif antipatinage.

10. Agencement de palier selon l'une quelconque des revendications 1 à 9, **caractérisé en ce que** la fixation des rails de guidage (6, 8) sur ou dans l'élément de support (14) s'effectue au moyen de vis (15).

11. Agencement de palier selon l'une quelconque des revendications 1 à 10, **caractérisé en ce que** les moyens (16) comprennent au moins un élément de vis (17) qui peut être vissé dans au moins un alésage fileté (18) dans l'élément de support (14).

12. Agencement de palier selon la revendication 11, **caractérisé en ce que** l'élément de support (14) présente des portions saillant latéralement (19, 20), dans lesquelles sont disposés les alésages filetés (18).
